# EUROPEAN PATENT APPLICATION

(11) **EP 1 245 615 A2**
(43) Date of publication of application: **02.10.2002**
(21) Application number: 02252173.6
(22) Date of filing: 26.03.2002
(51) Int. Cl.: C08J 5/12, C09J 123/02

(54) **Silicone composites and methods of making them**

(30) Priority: 26.03.2001 GB 0107548
(71) Applicant: Avon Polymer Products Limited, Bradford on Avon, Wiltshire BA15 1AA (GB)
(72) Inventor: Skinner, Trevor Derek, Westbury, Wiltshire BA13 4TE (GB); Haile-Meskel, Yared, Townbridge, Wiltshire BA14 0YE (GB); Hine, Justin Steven, Melksham, Wiltshire SN12 8LD (GB)
(74) Representative: Stoner, Gerard Patrick

(57) **Abstract**

Silicone elastomers can be bonded by fusion to a polyolefin such as ultrahigh molecular weight polyethylene. The polyolefin may be a second structured layer in a composite, or an intermediate film or interface between the silicone elastomer and a body of another elastomeric or thermoplastic material.

## Description

This invention has to do with the manufacture of composite articles including silicone elastomer components bonded to other elastomer or non-elastomer components.

### BACKGROUND

It is in general difficult to form a strong bond to rubber surfaces. Numerous techniques and materials have been developed. Adhesive compositions are available and these are effective to varying degrees. It is also known to form composites by setting a polymer resin in direct contact with an elastomer. One or both of the resin and elastomer may be uncured for the initial contacting, and then cured in situ to promote bonding. It is also known to modify the composition of a resin and/or elastomer in order to enhance the resultant bond, but nevertheless the bond is frequently weak or difficult to achieve. Prior surface treatments of rubber surfaces are also used to improve their bonding capability, e.g. by halogenation, corona treatment and application of chemical primer compositions.

GB-A-2256615 describes bonded rubber/rubber composite sheets produced from layers of rubber whose critical surface tension is required to be in the range 25 to 35 mN/m, e.g. EPDM, IIR, NR, SBR, bonded by interposing particulate or film ultrahigh molecular weight polyethylene (UHMWPE) between them and heating to fuse the UHMWPE. This teaching has been followed in a number of later documents.

Silicone elastomers are particularly difficult to bond. They have unusually low surface energy (less than 25 mN/m; typically 17 to 23 or 24 mN/m) which, while it provides some of the distinctive desirable properties of silicone, also prevents adhesion when adhesion is wanted. None of the prior art above following GB-A-2256615 refers to bonding of silicone elastomers.

### SUMMARY OF THE INVENTION

We have found that, quite unexpectedly and contrary to the prior art teachings referred to above, plastic polyolefins such as polyethylene (PE) and particularly ultrahigh molecular weight polyethylene (UHMWPE, PE-UH) can form a strong bond with a silicone elastomer surface by applying heat and pressure to bring them into intimate contact.

Typically this can be achieved without any special pre-treatment of the silicone elastomer surface, heating to at least the softening temperature of the polyolefin material and with little or no additional pressure needing to be applied to achieve bonding. Particularly by using polyolefin materials with high tensile strength e.g. PE-UH our findings open the way to the convenient manufacture of a range of useful and novel silicone elastomer composites.

Thus, in a first aspect we propose a method of making a composite article which includes a first substrate comprising or consisting of silicone elastomer material and having an exposed surface of the silicone elastomer material which is to be bonded, and a second substrate which may comprise or consist of silicone or non-silicone elastomer material with an exposed elastomer surface, or which may be of a non-elastomeric material such as a plastic polymer or metal. Those surfaces of the first and second substrates which are to be bonded are brought face to face, with a distribution of polyolefin material at the interface, and the polyolefin material in a softened condition creates intimate adhesive contact with the opposed surfaces. Another aspect of the invention is a composite article comprising the first and second substrates bonded together at that interface by the intimate adherent contact of the polyolefin material with the silicone elastomer surface.

The polyolefin material may be introduced as a layer between the first (silicone elastomer) and second substrates, this layer then being heated sufficiently to give adherent contact. Such a layer may be introduced as a continuous solid film or tape, or as a distribution of a polyolefin powder, or as a dispersion or solution of polyolefin in a suitable liquid carrier or solvent.

The polyolefin material may consist essentially of polyolefin or be a thermoplastic blend containing polyolefin in sufficient amount to provide adhesion.

Alternatively the polyolefin material may be incorporated in one or both of the substrates to be joined e.g. as a continuous or discontinuous blend component. It may be distributed throughout the bulk of the material or localised at the surface to be joined, in either case so as to be present in sufficient quantity at the interface to flow out into the required adherent contact with the opposed surfaces.

Where the polyolefin material is sufficiently melt-processable a melt thereof may also be injected or extruded between the opposed substrate surfaces.

The strongly adherent bond to silicone elastomer surfaces is obtainable with polyolefins of high mechanical, chemical or physical specification. This leads to the availability of composite articles useful in applications where they may be subject to substantial movement, vibration, stress, elevated temperature, extension, bending or aggressive environment. By appropriate selection of polyolefin materials one can obtain adhered joints between silicone elastomer and silicone or other elastomer, or between silicone elastomer and polymer resin, which are of the same order of strength as or indeed stronger than the bonded materials themselves, or at least the weaker of them. So, to take advantage of this bond strength preferably the polyolefin material used is one which has a tensile strength at least 50% and more preferably at least 100% of the tensile strength of the weaker of the two substrates. An alternative or additional criterion is that in a tensile or peel test at room temperature, failure of the composite is by tearing of a substrate material rather than by separation of the adhered interface or failure of the polyolefin material.

In an absolute sense, i.e. leaving aside the relative strength of the specific substrate materials, a preferred polyolefin material for forming the bond is one whose tensile modulus at room temperature is at least 500MPa.

Typically the polyolefin material is a polymer or copolymer of ethylene or other alkene such as propylene, butylene or octene. Homopolymers are preferred. We find that significant adhesion to elastomers is obtainable with a range of different polyolefins, so that a choice can be made based on the desired mechanical and other properties. Homopolymers of ethylene are suitable materials, preferably the linear or low-branched materials defined as HDPE and more preferably the special form of HDPE known as ultra-high molecular weight polyethylene (UHMWPE or PE-UH). High molecular weight leads to high bond strengths as well as contributing to abrasion resistance and toughness. In general, the preferred number average molecular weight of a PE or other polyolefin used herein is at least 0.5 x 10⁶, more preferably at least 1 x 10⁶. UHMWPE is usually defined as a straight-chain linear PE with a molecular weight of at least 1 x 10⁶; it may be 3 x 10⁶ or more and perhaps as high as 9 x 10⁶.

Because of their very high mechanical performance, the use of UHMWPE materials to form a bonding interface for a silicone elastomer can provide extremely useful high-performance elastomer composites. Because of their high molecular weight, UHMWPE materials cannot normally be melt processed and require sintering, machining or ram extrusion. Softening of UHMWPE generally occurs around 120-150°C, well below the degradation temperature for most silicone elastomers.

The choice of silicone elastomer is not critical. As mentioned previously, it is likely to have a surface energy not more than 23 or 24 mN/m, usually about 20 mN/m. Well-known diorganopolysiloxane-based rubber compositions include peroxy-curing and addition-curing types, with various organo groups which may be conventional e.g. methyl, phenyl, trifluoromethyl, vinyl groups. Examples are VMQ, PMQ, PVMQ and FVMQ.

The second substrate may be elastomeric: the elastomer is not particularly critical and may be selected from any of those currently in use including natural rubber (NR), polybutadiene rubber (BR) styrene-butadiene rubber (SBR), polyisobutylene (IM), polyisoprene rubber (IR), isobutylene-isoprene rubber (IIR), halogenated isobutylene-isoprene rubber (XIIR) generally, brominated and chlorinated isobutylene-isoprene rubbers (BIIR,CIIR), acrylonitrile butadiene rubber (NBR), carboxylated acrylonitrile butadiene rubber (XNBR), hydrogenated acrylonitrile butadiene rubber (HNBR), NBR-polyvinylchloride (NBR-PVC), chlorosulphonated polyethylene (CSM), ethyl acrylic copolymer rubber (ACM), ethylene acrylate terpolymer rubber (AEM), ethylene-propylene rubber (EPM), ethylene-propylene diene rubber (EPDM), epichlorohydrin homopolymer or copolymer (CO,ECO,GECO), chloroprene rubber (CR), fluorinated rubber (FKM/FPM), fluoromethyl silicone rubber (FMQ), polyurethane rubber (AU,EU), ethylene-vinyl acetate copolymer (EVM), chlorinated polyethylene (CPE), silicone elastomer as for the first substrate e.g. silicone rubber (VMQ), phenylmethylsilicone (PMQ), phenylvinylmethylsilicone (PVMQ), fluorovinylmethylsilicone (FVMQ), tetrafluoroethylene perfluoroelastomer (FFKM), thermoplastic elastomers (TPE's) and thermoplastic vulcanisates (TPV's: usually polypropylene-EPDM copolymer).

Where the second substrate is a non-elastomeric polymer it is not particularly limited but may be for example a polyolefin, polyamide, polyether, polyester, PVC or fluoroplastic such as a THV (copolymer of tetrafluoroethylene, hexafluoropropene and vinylidene fluoride) or a PVDF (polyvinylidene fluoride). Of course, blends of any of these may also be used.

Any of the above substrate materials may be compounded or filled using any of various fillers and additives e.g. according to conventional practice. For example elastomers are often blended with fillers such as silica and carbon black. We find that good adhesion can be achieved to these filled elastomers using the present polyolefin-bound interface. One or both materials may be foamed.

The polyolefin material itself may be filled e.g. with carbon black and we find that the bonding effect is retained.

The specific form of the substrates is not critical. In many cases one or both of them will be a layer and the resulting composite is a laminate. Such a laminate may be in sheet form or tubular. An example of the latter is a hose or pipe, such as a hose having a special chemically-resistant layer such as a fluoroplastic layer laminated on the inside of a silicone elastomer tube, or sandwiched between inner and outer elastomer layers of the pipe, one or both being or comprising silicone elastomer.

The thickness of the polyolefin layer in the composite is not critical. Usually it is thinner than the substrates to either side, and particularly so where these are both flexible or stretchable since polyolefins tend to be stiff and should preferably not be so thick as to compromise the deformability of the substrates. Typically the polyolefin layer is 1mm or less thick, more usually 0.5mm or less, preferably 0.2mm or less.

Processing, moulding or shaping of the silicone elastomer substrate or of the second substrate may be before or generally concurrent with the adhesion step. The processing may itself provide a combination of heat or pressure to initiate the adhesive bond with the polyolefin. Typical elastomer processing methods include calendering, extrusion, compression moulding, transfer moulding and injection moulding. Where any of these procedures involves curing or vulcanising the elastomer, that will normally dictate the minimum pressure and temperature conditions required. Insofar as these are consistent with conditions for achieving bonding by means of the polyolefin interface as proposed herein, i.e. hot enough to soften the polyolefin, not so hot as to degrade it, and with an opportunity for it to be introduced at the relevant substrate interface, the two operations can be combined. However the polyolefin adhesion works with pre-cured silicone elastomers as well.

Composite articles in which the invention may be used include silicone hoses as suggested above, hose junctions, silicone hose and pipe coatings and linings and composite silicone rubber sheet products in which different layers of the laminate are selected to provide a combination of desired properties e.g. impermeability for air containment in an inflatable article, other fluid containment in a chemical tank, protective clothing and the like.

In an important further aspect of the invention a polyolefin used to form a bond to silicone elastomer itself constitutes a substantial functional and/or structural element of a bonded composite. In that respect it need not have substrates bonded to either side. It may be for example the lining of a pipe or hose, or an exposed surface layer of a laminate in sheet or block form. In this aspect of the invention the choices of polyolefin materials, elastomer materials, compounding and filling options and processing options as set out above apply *mutatis mutandis*, but of course the possible strictures on thickness of the polyolefin layer do not apply.

There are valuable new implementations for silicone rubbers bonded to PE-UH substrates in non-film form, e.g. block and other shapes. Examples include electrical insulating parts e.g. for power transmission lines, conduction and anti-static applications, automotive and industrial items requiring combination of hard and soft elements, shower heads (preventing limescale build-up), closures with integrated seals, medical devices and tool handles. Further uses of PE-UH bonded to silicone rubber include windshield wiper blades, silicone hose lined for chemical resistance, silicone hose covered for physical and/or chemical protection, silicone hose lined and/or covered for impermeability.

### BRIEF DESCRIPTION OF THE DRAWINGS

In the drawings:
Fig. 1 is an oblique view of a test sample used for testing bond strength;
Fig. 2 shows schematically an UHMWPE layer bonded to a silicone elastomer substrate;
Fig. 3 shows a UHMWPE layer bonded to join two elastomer substrates;
Fig. 4 shows a UHMWPE layer bonded to join a silicone elastomer substrate to a thermoplastic substrate;
Fig. 5 shows a UHMWPE substrate bonded to a silicone elastomer component, and
Fig. 6 shows effects of temperature on bond strength.

The invention is now illustrated by means of examples, in the form of tests and practical composites.

### EXPERIMENTS

Tests were carried out in which UHMWPE film was bonded to various silicone rubbers as the silicone rubbers were cured, and a peel test carried out to determine whether a bond was formed.

### Materials

The UHMWPE films used were commercially available films about 0.3mm thick, manufactured in tape form by shaving from sintered block. Two kinds were used, a transparent unfilled film ("TR") and a film of the same material filled with 3 wt% carbon black ("BR").

Various uncured silicone rubber compounds were used, and are listed in the subsequent table.

### Specimen Preparation

The above-mentioned UHMWPE films were cut to strips 150 x 25mm. These strips were laid in rectangular strip-form moulds (150 x 25 x 5mm). A strip of the uncured silicone rubber was put in the mould on top of the UHMWPE film, with a 25mm² piece of Melanex film interposed between the rubber and UHMWPE at one end to prevent bonding at that part.

The mould was then closed and heated and cured under about 80t compression force. The curing time and temperature varied from sample to sample, being determined in accordance with conventional practice for the silicone rubber compound concerned. Generally speaking the cure times varied from 5 minutes to 30 minutes and the cure temperatures from 148°C to 180°C.

The adhered laminate strips were then removed from the moulds.

### Peel Test

Because of the Melanex film insert, the end of each cured sample composite had a non-bonded region. The ends of the UHMWPE strip and the cured silicone rubber strip were separated at this region and clamped into the respective clamps of a Lloyd's tensometer. A peel test was carried out at a pull speed of 50mm per minute.

### Results

The results are given in Table 1.

**Table 1**

| Elastomer | Average Strength N/mm | Peak Load [N] | Type of Breakdown |
|---|---|---|---|
| Silicone#1 | 4.37 | 125.22 | RF* |
| Silicone#2 | 4.15 | 122.73 | RF |
| Silicone#3 | 4.26 | 129.19 | PEF** |
| Silicone#4 | 3.74 | 115.94 | PEF |
| Silicone#5 | 6.71 | 220.99 | PEF |
| Silicone#6 | 6.71 | 221.19 | PEF |

| | | | |
|---|---|---|---|
| Breakdown *RF: Rubber failure | | | |
| **PEF: Polyethylene failure | | | |
| Elastomers #1,#2: "3760/DCP"; dicumyl peroxide-cured VMQ, supplier Little John Ltd. UHMWPE respectively TR and BR. | | | |
| #3: "3760/DHBP"; 2,5-di(t-butylperoxy)-2,5 dimethylhexane-cured VMQ | | | |
| #4: "7130C"; Pt-catalysed addition-cured VMQ, Little John Ltd. | | | |
| #5, #6 : Supplied by Avon Polymer France : grey silicone | | | |

In fact the tests did not lead to conventional peel strength data because in all examples except one the bond strength was greater than the strength of the rubber strip, or of the exposed PE strip, so that the mode of failure was the breaking of one or the other strip at loads varying from about 70 to about 220N and typically between 100 and 150N.

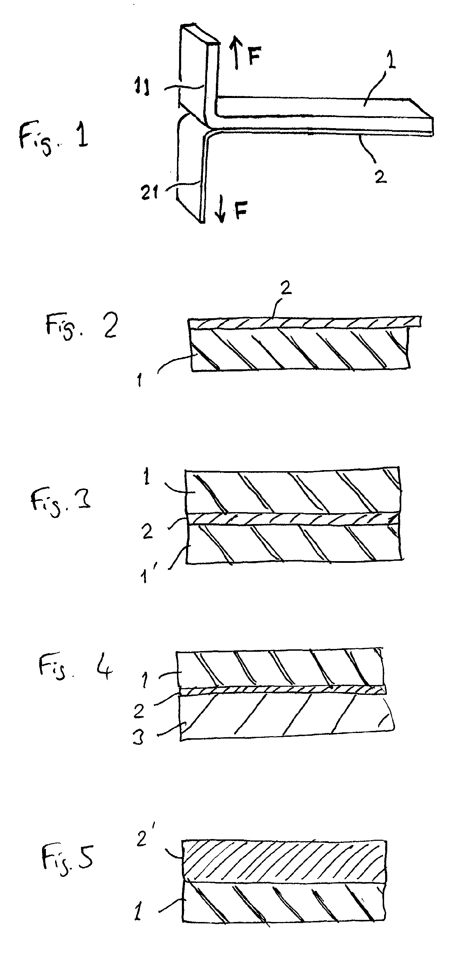

Fig. 1 shows the peel test schematically, indicating the rubber strip 1 bonded to the UHMWPE strip 2 over most of their lengths, and with the free unbonded ends 11,21 pulled in opposite directions by separating the tensometer clamps at a steady rate. This led to a gradually increasing tensile force F owing to the elastic stretching of the rubber strip end 11, since as mentioned the bond between the strips 1,2 was strong and did not unpeel at all, leading to failure by breaking of the UHMWPE end 21 or tearing of the rubber.

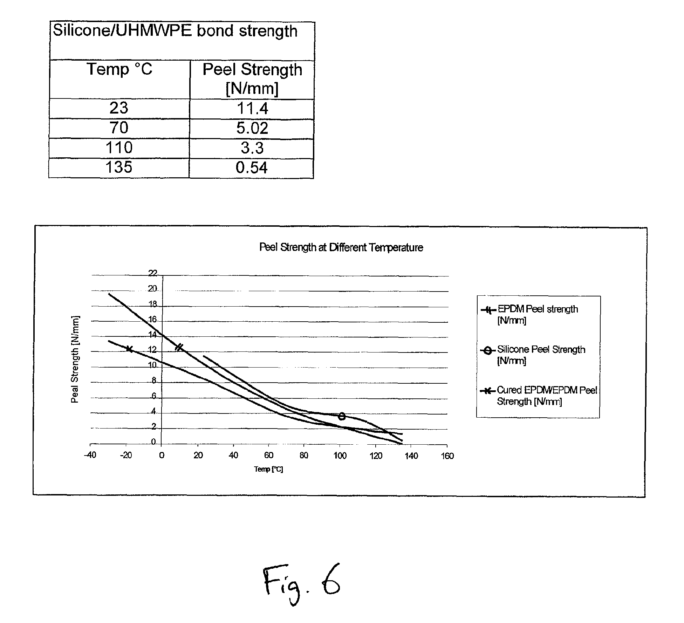

Figs. 2 to 5 show some useful constructions. In Fig. 2 a thin layer or film 2 of UHMWPE is bonded over the surface of a silicone rubber body or layer 1. In Fig. 3 the UHMWPE film 2 provides a bond joining two rubber substrates 1,1', one of which is silicone rubber and the other is either silicone or another elastomer. Fig. 4 shows a UHMWPE film 2 bonding a silicone elastomer 1 to a layer of a thermoplastic resin 3.

Fig. 5 shows a different aspect in which a rigid body (non-film), block or sheet of UHMWPE or other polyolefin 2' is bonded as a structural/functional element to a layer of silicone rubber 1 to form an adhered composite.

Fig. 6 shows peel test results at different temperatures, comparing the silicone bonding results to results with EPDM, known to be bondable with PE-UH. Fig. 6 shows that bonding with silicones was as good as or better than EPDM bonding, and effective over the tested temperature range -30°C to 130°C.

### FURTHER SAMPLES

(1) Instead of film, a dusting of UHMWPE powder (supplied by Ticona) was applied to the surface of uncured silicone rubber which was then cured in the strip mould as before. The powder fused and flowed out to form a tightly-adherent covering on the cured rubber surface. The rubber could be stretched to its elastic limit without the adherent PE layer delaminating, although it was irreversibly stretched in the test.
(2) A number of samples were prepared by sandwiching UHMWPE films as described above - both unfilled and carbon black filled - between strips of different kinds of uncured silicone rubbers selected from the compounds used in the first test. Since the previous peel tests did not result in peeling these were not repeated for the double-rubber samples but some were subject to tensile tests which led to rupture by tearing of the weaker of the two rubbers rather than by opening at the adhered interface.
(3) A further set of rubber-rubber samples were prepared using a dusting of powdered UHMWPE between the layers instead of the film used previously. Interfacial bonds of the same order of strength were obtained.
(4) Further samples were prepared - again using strips of the dimensions mentioned above - but this time interposing the UHMWPE film or powder between silicone rubber strips which had been cured. Since it was not necessary to subject these samples to curing conditions they were instead heated to 165°C for about 3 minutes to soften the UHMWPE, applying a compression force of 20kgf/cm². Once again, after cooling it was found that bonds having essentially the same high bonding strength as before were obtained.

## Claims

1. A method of making a composite article which includes first and second substrates, at least the first substrate comprising or consisting of silicone elastomer material and having an exposed surface of the silicone elastomer material to be bonded to a corresponding surface of the second substrate,
the method comprising bringing said surfaces of the first and second substrates face to face with a distribution of polyolefin material at the interface, and causing the polyolefin material in a softened condition to make adhesive contact with the silicone elastomer material of the first substrate.

2. A method according to claim 1 in which the polyolefin material is introduced as a layer between the first and second substrates, this layer being heated to give the adherent contact.

3. A method according to claim 2 in which the layer is a solid film or tape.

4. A method according to claim 2 in which the layer is a distribution of polyolefin powder.

5. A method according to any one of the preceding claims in which the polyolefin material comprises polyethylene, polypropylene, polybutylene or polyoctene.

6. A method according to claim 5 in which the polyolefin material is a high-density polyethylene.

7. A method according to claim 6 in which the polyolefin material is ultra-high molecular weight polyethylene (UHMWPE).

8. A method according to any one of the preceding claims in which both the first and second substrates are elastomeric.

9. A method according to any one of claims 1 to 7 in which one of the substrates is a non-elastomeric polymer.

10. A method according to claim 1 in which the second substrate is of ultra-high molecular weight polyethylene.

11. A method according to any one of the preceding claims in which one or both substrates is in layer form, which may be tubular, and the resulting composite is a laminate.

12. A method according to any one of the preceding claims in which the elastomer of one or both substrates is in an uncured state when they are brought together, and heat used to cure the elastomer also softens the polyolefin at the interface.

13. A composite comprising first and second substrates, at least one of which comprises or consists of silicone elastomer material having a surface bonded to the other substrate at an interface by the intimate adherent contact of polyolefin material with the silicone elastomer surface, obtained or obtainable in accordance with any one of claims 1 to 12.
